# EUROPÄISCHE PATENTSCHRIFT

(11) **EP 4 519 575 B1**
(45) Veröffentlichungstag und Bekanntmachung des Hinweises auf die Patenterteilung: **16.04.2025**
(21) Anmeldenummer: 24740041.9
(22) Anmeldetag: 01.07.2024
(51) Int. Cl.: F04D 19/00, F04D 25/02, F04D 29/32, F04D 29/36, F04D 29/70

(54) **LÜFTERRAD**
FAN WHEEL
ROUE DE VENTILATEUR

(30) Priorität: 20.07.2023 DE 102023119250
(43) Veröffentlichungstag der Anmeldung: 12.03.2025
(73) Patentinhaber: IE ASSETS GMBH & CO. KG, 73614 Schorndorf (DE)
(72) Erfinder: LECHLER, Markus, 73614 Schorndorf (DE); ARNOLD, Samuel, 73614 Schorndorf (DE)
(74) Vertreter: Müller, Gottfried
(86) Internationale Anmeldenummer: PCT/EP2024/025193
(87) Internationale Veröffentlichungsnummer: WO 2025/016556

(56) Entgegenhaltungen:
- WO-A1-2019/179562
- WO-A1-2019/242799
- WO-A1-2021/121648
- DE-A1- 102012 015 358

## Beschreibung

Die Erfindung betrifft ein Lüfterrad mit Lüfterflügeln, die in einer Nabe um ihre Flügellängsachsen verschwenkbar gelagert sind, nach dem Oberbegriff des Anspruches 1.

Aus der WO 2021/121648 A1 ist ein Lüfterrad mit verstellbaren Lüfterflügeln bekannt, die über ein Planetengetriebe mit einem Stellring verbunden und in einer Nabe um ihre Flügelachsen drehbar sind. Der Antrieb des Lüfterrads erfolgt über einen Antriebsflansch, der mit einem Antriebsmotor koppelbar ist. In den Stellring ist eine Führungsbahn eingebracht, in die ein mit der Nabe verbundener Führungsbolzen hineinragt. Auf dem Antriebsflansch sitzt ein Sonnenrad des Planetengetriebes auf, das mit Planetenrädern kämmt, welche auf einem mit dem Stellring verbundenen Planetenträger gelagert sind. Zur Umstellung der Flügelposition wird die Antriebsdrehzahl reduziert, woraufhin trägheitsbedingt der Führungsbolzen in die gegenüberliegende Anschlagsposition in der Führungsbahn wandert und die Lüfterflügel in die gewünschte veränderte Winkellage verstellt werden. Über das Planetengetriebe wird die Bewegung des Führungsbolzens in der Führungsbahn gebremst.

Die DE 10 2012 015 358 A1 offenbart einen Ventilator mit Laufschaufeln, die um ihre Längsachse drehbar sind. An den Laufschaufeln ist ein Kegelritzel angeordnet, das in ein Kegelrad mit einem Planetengetriebe auf einer Verstellantriebswelle eingreift.

Aus der WO 2019/242799 A1 ist ein in nur einer Drehrichtung antreibbares Lüfterrad bekannt, bei dem die Lüfterflügel durch trägheitsbedingte Rotation sowie durch aerodynamische Beaufschlagung auf entgegengesetzte Förderrichtungen umstellbar sind.

Die WO 2019/179562 A1 zeigt ein in einer Drehrichtung anzutreibendes Lüfterrad mit einer zentralen Antriebseinheit, einer Nabe und mit radialen, in der Nabe gelagerten Lüfterflügeln, deren Flügelwinkel durch Antrieb um ihre Flügelachsen auf entgegengesetzte Förderrichtungen umstellbar sind.

Der Erfindung liegt die Aufgabe zugrunde, mit einfachen konstruktiven Maßnahmen und in kompakter Bauweise ein Lüfterrad mit schwenkbar gelagerten Lüfterflügeln in der Weise auszubilden, dass bei der Umstellung der Lüfterflügel hohe Bauteilbelastungen vermieden werden.

Diese Aufgabe wird erfindungsgemäß mit den Merkmalen des Anspruches 1 gelöst. Die Unteransprüche geben zweckmäßige Weiterbildungen an.

Das erfindungsgemäße Lüfterrad wird beispielsweise in Baumaschinen oder landwirtschaftlichen Maschinen eingesetzt und zeichnet sich durch eine Umstellbarkeit der Lüfterflügel aus, die in einer Nabe um ihre Flügellängsachsen verschwenkbar gelagert sind. Mit der Umstellung der Lüfterflügel gelangt das Lüfterrad von einem Luftfördermodus in einen Reinigungsmodus zur Reinigung des Lüfterrades von Staub- und Schmutzablagerungen.

Das Lüfterrad weist einen mit der Nabe über einen begrenzten Freilauf verbundenen Antriebsflansch auf, wobei über den Freilauf die Winkellage der Lüfterflügel gegenüber der Nabe einstellbar ist. Der Drehantrieb des Lüfterrades erfolgt über den Antriebsflansch, der mit einem Antriebsmotor koppelbar ist.

Das Lüfterrad ist mit einem Planetengetriebe zwischen dem Antriebsflansch und den Lüfterflügeln versehen. Ein vom Planetengetriebe angetriebener Stellkörper ist gegenüber der Nabe in der Weise gelagert, dass der Stellkörper überlagert zur Drehantriebsbewegung in dem Freilauf eine begrenzte Relativdrehbewegung zur Nabe ausführen kann. Wenn der Stellkörper sich im Rahmen des Freilaufs relativ zur Nabe bewegt, wird die gewünschte Änderung der Winkellage der Lüfterflügel erreicht. Jede der beiden Endpositionen des Freilaufs markiert eine stabile Position der Lüfterflügel. Bei diesen stabilen Positionen handelt es sich insbesondere um die Förderposition, welche die Standardstellung zur Luftförderung ist, und um die Reinigungsposition mit einer Umkehr der Luftförderrichtung zur Reinigung des Lüfterrades. Das Planetengetriebe bewirkt, dass die Relativdrehbewegung zwischen Stellkörper und Nabe im Rahmen des Freilaufs zur Umstellung der Winkellage der Lüfterflügel in gebremster Weise durchgeführt wird, so dass entsprechend die Bauteilbelastungen bei der Umstellung reduziert sind und insbesondere beim Erreichen von Endpositionen ein hoher Impuls vermieden wird.

Das Lüfterrad ist in nur einer Drehrichtung antreibbar. Es ist nicht erforderlich, die Drehrichtung des Lüfterrades umzukehren, um die gewünschte Änderung der Winkellage der Lüfterflügel zu erreichen. Vielmehr genügt es, über eine Geschwindigkeitsänderung in der Antriebsbewegung des Lüfterrads aufgrund der Trägheit der Lüfterflügel inklusive Nabe eine Relativdrehbewegung zwischen dem Stellkörper und der Nabe zu einzustellen, die Träger der schwenkbar gelagerten Lüfterflügel ist. Bei der Relativdrehbewegung verstellt der Stellkörper die Winkellage der Lüfterflügel. Beispielsweise wird bei einer Geschwindigkeitsreduzierung, die mit einer Mindestverzögerung erfolgt, die Verstellung der Lüfterflügel von der Förderposition in die Reinigungsposition erreicht und bei einer Geschwindigkeitserhöhung, die mit einer Mindestbeschleunigung erfolgt, die Verstellung der Lüfterflügel von der Reinigungsposition in die Förderposition.

Das erfindungsgemäße Lüfterrad ist in der Weise ausgebildet, dass ein drehfest mit dem Antriebsflansch verbundenes Sonnenrad des Planetengetriebes und der Antriebsflansch auf axial gegenüberliegenden Stirnseiten des Lüfterrads angeordnet sind. Hierbei ist die Verzahnung des Sonnenrads, mit der das Sonnenrad mit Planetenrädern des Planetengetriebes kämmt, axial beabstandet zum Antriebsflansch angeordnet.

Diese Ausführung hat den Vorteil, dass das Sonnenrad unabhängig vom Antriebsflansch ausgebildet ist und insbesondere der Verzahnungsbereich des Sonnenrades unabhängig von den Dimensionen des Antriebsflansch ist. Das Sonnenrad sitzt nicht auf dem Antriebsflansch auf, sondern erstreckt sich axial stirnseitig am Antriebsflansch oder einem mit dem Antriebsflansch verbundenen Bauteil, was die Verwendung kleiner Sonnenräder mit einer entsprechend geringen Zähnezahl erlaubt. Dementsprechend kann ein Übersetzungsverhältnis im Planetengetriebe erreicht werden, mit dem die gewünschte gebremste Bewegung im Freilauf und ein höheres Drehmoment umgesetzt wird.

Das Sonnenrad des Planetengetriebes kämmt mit Planetenrädern auf einem Planetenträger, wobei die Planetenräder an der verzahnten Innenseite eines Hohlrades umlaufen. Sonnenrad, Planetenträger und Hohlrad sind koaxial zum Antriebsflansch angeordnet und befinden sich vorteilhafterweise alle auf der gleichen axialen Seite des Lüfterrades, axial gegenüberliegend zum Antriebsflansch. Dementsprechend können die Bauteile des Planetengetriebes und der Antriebsflansch unabhängig voneinander ausgeführt werden, wodurch die Flexibilität im Hinblick auf die konstruktive Auslegung und das Design des Lüfterrades erhöht werden.

Gemäß einer vorteilhaften Ausführung weist das Sonnenrad einen kleineren Außendurchmesser als der Antriebsflansch auf. Dies ermöglicht große Über- bzw. Untersetzungsverhältnisse, so dass eine hohe Antriebsdrehzahl in eine kleine rotatorische Stellbewegung des Stellkörpers mit höherem Drehmoment umgesetzt wird.

In einer weiteren vorteilhaften Ausführung ist der Stellkörper von einem Planetenträger des Planetengetriebes gebildet. Ein separat ausgebildeter Stellkörper ist somit nicht erforderlich, wodurch eine Reduzierung des benötigten Bauraums erreicht wird. In einer alternativen Ausführung ist es auch möglich, dass der Stellkörper und der Planetenträger als voneinander unabhängige Bauteile ausgebildet sind, die aber drehfest miteinander verbunden sind. Der Stellkörper kann beispielsweise als ein Stellring ausgebildet sein.

Gemäß noch einer vorteilhaften Ausführung ist der Stellkörper mit einer Verzahnung versehen und kämmt mit einem Flügelritzel, das an einem Achsfuß des Lüfterflügels angeordnet ist, wobei der Achsfuß schwenkbar in der Nabe gelagert ist. Das Flügelritzel ist beispielsweise als ein Kegelritzel ausgebildet. Bei einer Drehbewegung des Stellkörpers im Rahmen des Freilaufs verdreht sich das Flügelritzel, wodurch die rotatorische Bewegung des Lüfterflügels bewirkt wird.

Der Freilauf ist in bevorzugter Ausführung von einem Führungsbolzen, der drehfest direkt oder indirekt mit dem Antriebsflansch verbunden ist, und einer bogenförmigen Führungsbahn in der Nabe gebildet, wobei der Führungsbolzen in die Führungsbahn hineinragt und entlang der Führungsbahn verstellt werden kann. Die gegenüberliegenden stirnseitigen Enden der Führungsbahn markieren die Endpositionen, welche die Förderposition und die Reinigungsposition der Lüfterflügel darstellen. Die Führungsbahn ist kreisbogenförmig ausgebildet und erstreckt sich vorteilhafterweise über ein Winkelsegment, das größer als 90° ist, insbesondere größer als 120° und vorzugsweise mindestens 150° beträgt. Die verhältnismäßig große Länge der Führungsbahn ermöglicht eine präzise Einstellung der Winkellage der Lüfterflügel.

In vorteilhafter Ausführung sind zwei zur Längsachse spiegelverkehrt angeordnete Führungsbahnen in die Nabe eingebracht, wobei in jede Führungsbahn jeweils ein Führungsbolzen hineinragt. Zwei Führungsbahnen vorzusehen hat den Vorteil, dass die Kräfte gleichmäßig verteilt und Kippmomente vermieden sowie die Antriebsmomente aufgeteilt werden.

Es kann zweckmäßig sein, an beiden Enden der Führungsbahn jeweils einen Dämpfungskörper anzuordnen. Die Dämpfungskörper sind beispielsweise als ein Gummipuffer ausgebildet und dämpfen den Aufprall des Führungsbolzens am stirnseitigen Ende der Führungsbahn bei der Überführung von einer Endposition zur gegenüberliegenden Endposition.

In einer weiteren vorteilhaften Ausführung ist der Antriebsflansch drehfest mit einer Hauptwelle verbunden, die Träger der Nabe ist. Antriebsflansch und Hauptwelle sind zwei separate, koaxial angeordnete Bauteile, die miteinander gekoppelt sind und konstruktiv unabhängig voneinander gestaltbar sind. Axial liegt die Hauptwelle zwischen dem Antriebsflansch und dem Sonnenrad des Planetengetriebes, das drehfest mit der Hauptwelle verbunden ist.

Gemäß noch einer weiteren vorteilhaften Ausführung ist ein Hohlrad des Planetengetriebes, in welchem die Planetenräder abrollen, drehfest mit der Nabe verbunden. Das Sonnenrad, das Hohlrad und die Planetenräder mit dem Planetenträger befinden sich alle an der gleichen axialen Stirnseite des Lüfterrades mit axialem Abstand zum Antriebsflansch. Es kann zweckmäßig sein, die Zahnräder des Planetengetriebes mit einem Getriebedeckel abzudecken, der beispielsweise an der axialen Außenseite des Hohlrads gehalten ist.

Weitere Vorteile und zweckmäßige Ausführungen sind den weiteren Ansprüchen, der Figurenbeschreibung und den Zeichnungen zu entnehmen. Es zeigen:

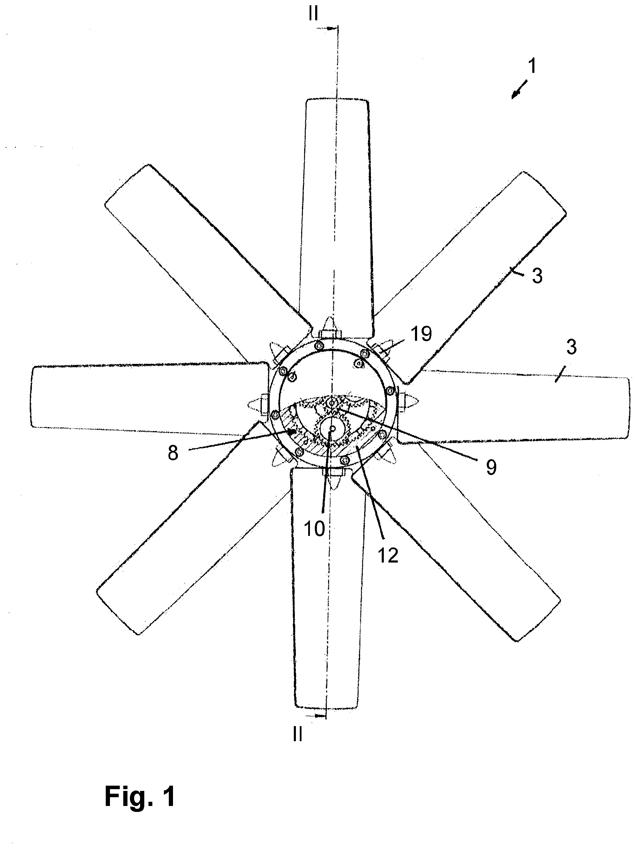

- Fig. 1: eine Draufsicht auf ein Lüfterrad mit verstellbaren Lüfterflügeln,
- Fig. 2: eine Schnittdarstellung des Lüfterades gemäß Schnittlinie II-II aus Fig. 1,
- Fig. 3: eine vergrößerte Darstellung des Schnittes gemäß Fig. 2,
- Fig. 4: eine Schnittdarstellung einer Nabe quer zur Längs- und Antriebsachse des Lüfterrades gemäß Schnittlinie IV-IV aus Fig. 3.

In den Figuren sind gleiche Bauteile mit gleichen Bezugszeichen versehen.

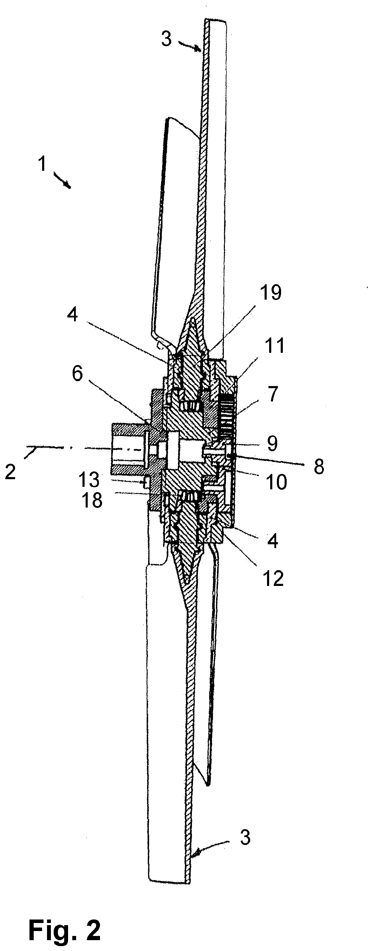

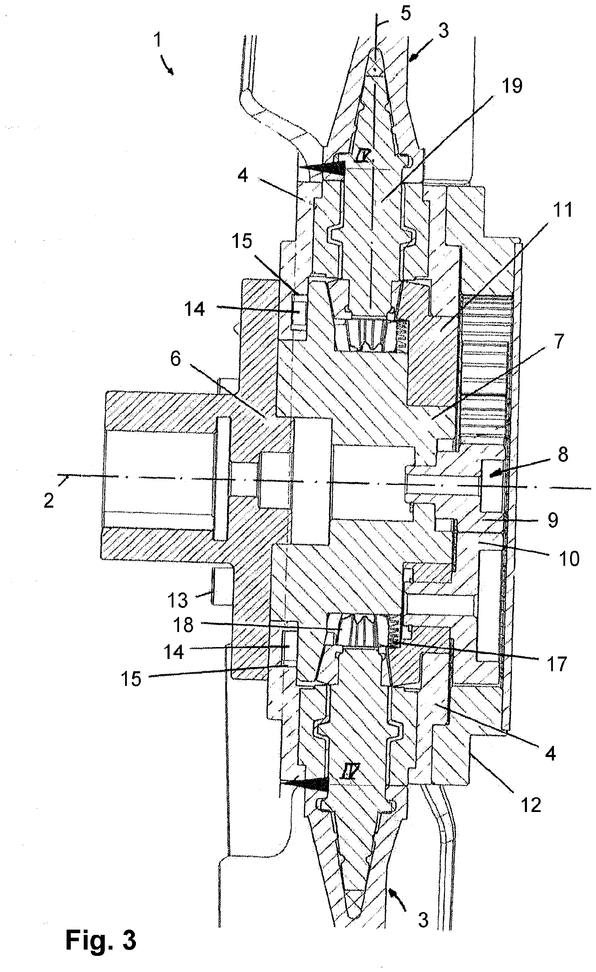

Das Lüfterrad 1 ist um seine Längs- und Antriebsachse 2 Fig. 2, Fig. 3) rotierend antreibbar und weist über den Umfang verteilt radial zur Längs- und Antriebsachse 2 sich erstreckende Lüfterflügel 3 auf. In einer Nabe 4 sind die Lüfterflügel 3 um ihre Flügellängsachsen 5 schwenkbar gelagert und insbesondere um annähernd 180° zwischen zwei Endpositionen zu verschwenken, die einem Luftfördermodus und einem Reinigungsmodus entsprechen. Die dem Luftfördermodus entsprechende Position der Lüfterflügel 3 stellt die Standardposition dar, in der vom rotierenden Lüfterrad 1 ein Luftstrom erzeugt wird. Die dem Reinigungsmodus entsprechende Position der Lüfterflügel 3 wird kurzzeitig eingenommen, um durch Umkehrung der Luftförderrichtung die Lüfterflügel von Staub und Verschmutzungen zu befreien.

Das Lüfterrad 1 umfasst des Weiteren einen Antriebsflansch 6, eine Hauptwelle 7 und ein Planetengetriebe 8, das ein Sonnenrad 9, Planetenräder 10 auf einem Planetenträger 11 und ein Hohlrad 12 aufweist. Diese Bauteile sind koaxial zur Längs- und Antriebsachse 2 angeordnet bzw. bewegen sich im Fall der Planetenräder 10 um die Längs- und Antriebsachse 2 herum. Der Antriebsflansch 6 wird von einer Antriebseinrichtung angetrieben, insbesondere von einem Elektromotor oder einem Hydraulikmotor. Der Antrieb erfolgt ausschließlich in eine Drehrichtung; auch bei einem Wechsel von Luftfördermodus zu Reinigungsmodus erfolgt kein Wechsel der Drehrichtung.

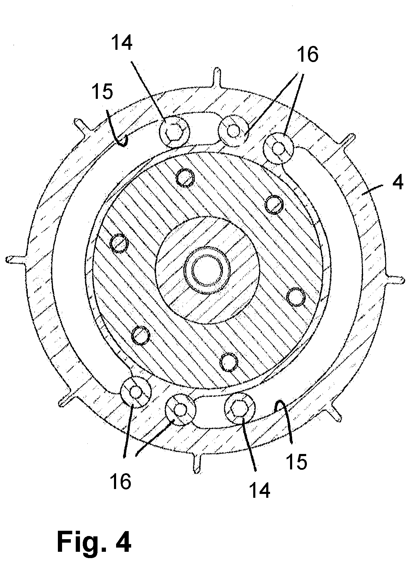

Der Antriebsflansch 6 umfasst einen hohlzylindrischen Flanschabschnitt zur Kopplung mit der Antriebseinrichtung und eine sich an den hohlzylindrischen Flanschabschnitt anschließende Ringschulter mit größerer radialer Erstreckung, die über Verbindungsschrauben 13 drehfest mit der Hauptwelle 7 verbunden ist, welche Träger der radial außen auf der Hauptwelle 7 aufsitzenden Nabe 4 ist, wobei die Nabe 4 gegenüber der Hauptwelle7 und dem Antriebsflansch 6 eine Relativdrehbewegung im Rahmen eines Freilaufs ausführen kann. Der Freilauf ist von einem Führungsbolzen 14 und einer kreisbogenförmigen Führungsbahn 15 gebildet, die in die Nabe 4 konzentrisch zur Längs- und Antriebsachse 2 eingebracht ist (Fig. 3, Fig. 4) und sich über ein Winkelsegment von annähernd 180° erstreckt. Aus Gründen einer gleichmäßigen Kraftverteilung weist die Nabe 4 zwei spiegelverkehrt zur Längs- und Antriebsachse 2 angeordnete Führungsbahnen 15 auf, in die jeweils ein Führungsbolzen 14 hineinragt. An beiden Enden der Führungsbahnen 15 sind jeweils Dämpfungskörper 16 in Form eines Gummipuffers angeordnet, die den Aufprall des Führungsbolzens 14 bei einer Verstellbewegung zwischen Luftfördermodus und Reinigungsmodus dämpfen.

Der Antriebsflansch 6 und das Planetengetriebe 8 befinden sich auf axial gegenüberliegenden Seiten der Hauptwelle 7. Das Sonnenrad 9 des Planetengetriebes 8 ist drehfest mit der Hauptwelle 7 verbunden und über die Hauptwelle 7 auch drehfest mit dem Antriebsflansch 6 gekoppelt. Die Verzahnung des Sonnenrads 9 befindet sich axial auf Abstand zur Hauptwelle 7 und damit auch zum Antriebsflansch 6. Der Außendurchmesser des Sonnenrads 9 ist kleiner als der Außendurchmessers des Antriebsflansches 6 sowohl im Bereich des hohlzylindrischen Flanschabschnitts als auch der Ringschulter.

Das Sonnenrad 9 kämmt mit den Planetenrädern 10 am Planetenträger 11, der auf einer Schulter der Hauptwelle 7 aufsitzt, ohne drehfest mit der Hauptwelle 7 verbunden zu sein. Die Planetenrädern 10 kämmen auf der radial außenliegenden Seite mit der Innenverzahnung des Hohlrades 12, das an die Nabe 4 angrenzt und drehfest mit der Nabe 4 verbunden ist. Der Planetenträger 11 bildet einen ringförmigen Stellkörper zur Winkelverstellung der Lüfterflügel 3. Zu diesem Zweck ist der Planetenträger 11 auf der dem Antriebsflansch 6 zugewandten Seite mit einer seitlichen Verzahnung 17 versehen, insbesondere einer Kegelverzahnung, die mit einem kegelförmigen Flügelritzel 18 kämmt, welches sich an der radial innenliegenden Seite eines Achsfußes 19 jedes Lüfterflügels 3 befindet. Der Achsfuß 19 ist drehbar in der Nabe 4 gelagert und ermöglicht eine Drehung des Lüfterflügels 3 um die Flügellängsachse 5.

Zur Verstellung der Lüfterflügel 3 vom Luftfördermodus in den Reinigungsmodus wird die Antriebsgeschwindigkeit des Lüfterrades 1 in der Weise reduziert, dass eine Mindestverzögerung erreicht wird. Aufgrund der Trägheit sind die Lüfterflügel 3 bestrebt, ihre ursprüngliche Geschwindigkeit beizubehalten, was zu einer Relativbewegung zwischen dem Antriebsflansch 6 bzw. der Hauptwelle 7 und der Nabe 4 führt. Daraufhin wird der Führungsbolzen 14, der mit der Hauptwelle 7 verbunden ist, in der Führungsbahn 15, welche in die Nabe 4 eingebracht ist, in Richtung der gegenüberliegenden Endanschlagsposition bewegt. Die Relativbewegung zwischen dem Antriebsflansch 6 bzw. der Hauptwelle 7 führt zur Änderung der Winkellage der Lüfterflügel 3 um ihre jeweilige Flügellängsachse 5, ohne dass die Drehrichtung des Lüfterrades 1 umgekehrt wird.

Die Verstellung der Lüfterflügel 3 um die Flügellängsachse 5 erfolgt aufgrund der Kopplung mit dem Planetengetriebe 8 nicht schlagartig, sondern mit reduzierter Geschwindigkeit, die von dem Übersetzungsverhältnis des Planetengetriebes 8 abhängt. Aufgrund der starren Kopplung des Sonnenrades 9 mit der Hauptwelle 7 und dem Antriebsflansch 6 wirkt sich die Geschwindigkeitsreduzierung des Antriebs unmittelbar auch auf das Sonnenrad 9 sowie die weiteren Zahnräder des Planetengetriebes 8 aus. Dementsprechend dreht sich der Planetenträger 11 mit der Verzahnung 17 relativ zum Flügelritzel 18 und wird der Achsfuß 19 mit dem Lüfterflügel 3 um die Flügellängsachse verdreht.

Zur Verstellung der Lüfterflügel 3 in Gegenrichtung, also vom Reinigungsmodus in den Luftfördermodus, wird die Antriebsgeschwindigkeit des Lüfterrades 1 in der Weise erhöht, dass eine Mindestbeschleunigung erreicht wird**.** Auch bei dieser Verstellbewegung sind die Lüfterflügel 3 aufgrund der Trägheit bestrebt, ihre ursprüngliche Geschwindigkeit beizubehalten, was wiederum zu einer Relativbewegung zwischen dem Antriebsflansch 6 bzw. der Hauptwelle 7 und der Nabe 4 führt und der Führungsbolzen 14 in der Führungsbahn 15 in Richtung der gegenüberliegenden Ausgangsposition bewegt wird**.** Die Lüfterflügel 3 werden wieder in ihre Ausgangsposition verstellt, die dem Luftfördermodus entspricht, wobei die Verstellbewegung der Lüfterflügel 3 aufgrund der Kopplung mit dem Planetengetriebe 8 ebenfalls mit reduzierter Geschwindigkeit erfolgt.

## Patentansprüche

1. Lüfterrad, das in nur einer Drehrichtung antreibbar ist, mit Lüfterflügeln (3), die in einer Nabe (4) um ihre Flügellängsachsen (5) verschwenkbar gelagert sind, wobei das Lüfterrad (1) einen mit der Nabe (4) über einen begrenzten Freilauf verbundenen Antriebsflansch (6) aufweist, der zum Antrieb des Lüfterrads mit einem Antriebsmotor koppelbar ist, mit einem Planetengetriebe (8) zwischen dem Antriebsflansch (6) und den Lüfterflügeln (3), wobei ein vom Planetengetriebe (8) angetriebener Stellkörper (11) gegenüber der Nabe (4) in der Weise gelagert ist, dass der Stellkörper (11) überlagert zur Drehantriebsbewegung in dem Freilauf eine begrenzte Relativdrehbewegung gegenüber der Nabe (4) ausführen kann, wobei der Stellkörper (11) bei der Relativdrehbewegung die Winkellage der Lüfterflügel (3) verstellt,
**dadurch gekennzeichnet,**
**dass** ein drehfest mit dem Antriebsflansch (6) verbundenes Sonnenrad (9) des Planetengetriebes (8) und der Antriebsflansch (6) auf axial gegenüberliegenden Stirnseiten des Lüfterrads (1) angeordnet sind, wobei die Verzahnung des Sonnenrads (9), mit der das Sonnenrad (9) mit Planetenrädern (10) des Planetengetriebes (8) kämmt, axial beabstandet zum Antriebsflansch (6) angeordnet ist.

2. Lüfterrad nach Anspruch 1,
**dadurch gekennzeichnet,**
**dass** das Sonnenrad (9) einen kleineren Außendurchmesser als der Antriebsflansch (6) aufweist.

3. Lüfterrad nach Anspruch 1 oder 2,
**dadurch gekennzeichnet,**
**dass** der Stellkörper (11) von einem Planetenträger (11) des Planetengetriebes gebildet ist.

4. Lüfterrad nach einem der Ansprüche 1 bis 3,
**dadurch gekennzeichnet,**
**dass** der Stellkörper (11) eine Verzahnung (17) aufweist, die mit einem Flügelritzel (18) kämmt, das an einem Achsfuß (19) des Lüfterflügels (3) angeordnet ist.

5. Lüfterrad nach einem der Ansprüche 1 bis 4,
**dadurch gekennzeichnet,**
**dass** der Freilauf von einem Führungsbolzen (14), der drehfest mit dem Antriebsflansch (6) verbunden ist, und einer bogenförmigen Führungsbahn (15) in der Nabe (4) gebildet ist, wobei der Führungsbolzen (14) in die Führungsbahn (15) hineinragt.

6. Lüfterrad nach Anspruch 5,
**dadurch gekennzeichnet,**
**dass** die Führungsbahn (15) in der Nabe sich über ein Winkelsegment größer als 90°, insbesondere größer als 120°, vorzugsweise mindestens 150° erstreckt.

7. Lüfterrad nach Anspruch 5 oder 6,
**dadurch gekennzeichnet,**
**dass** an beiden Enden der Führungsbahn (15) jeweils ein Dämpfungskörper (16) angeordnet ist.

8. Lüfterrad nach einem der Ansprüche 5 bis 7,
**dadurch gekennzeichnet,**
**dass** zwei zur Längs- und Antriebsachse (2) spiegelverkehrt angeordnete Führungsbahnen (15) in die Nabe (4) eingebracht sind, wobei in jede Führungsbahn (15) jeweils ein Führungsbolzen (14) hineinragt.

9. Lüfterrad nach einem der Ansprüche 1 bis 8,
**dadurch gekennzeichnet,**
**dass** der Antriebsflansch (6) drehfest mit einer Hauptwelle (7) verbunden ist, die Träger der Nabe (4) ist.

10. Lüfterrad nach Anspruch 9,
**dadurch gekennzeichnet,**
**dass** das Sonnenrad (9) axial an die Hauptwelle (7) angrenzt und mit der Hauptwelle (7) verbunden ist.

11. Lüfterrad nach einem der Ansprüche 1 bis 10,
**dadurch gekennzeichnet,**
**dass** ein Hohlrad (12) des Planetengetriebes (8), in welchem die Planetenräder (10) abrollen, drehfest mit der Nabe (4) verbunden ist.

## Claims

1. Fan wheel that can be driven in only one direction of rotation, with fan blades (3) that are pivotably mounted in a hub (4) about their blade longitudinal axes (5), the fan wheel (1) having a drive flange (6) connected to the hub (4) via a limited freewheel, which can be coupled to a drive motor to drive the fan wheel, with a planetary gear (8) between the drive flange (6) and the fan blades (3), an actuating body (11) driven by the planetary gear (8) being mounted relative to the hub (4) in such a way that the actuating body (11) can carry out a limited relative rotational movement relative to the hub (4) superimposed on the rotary drive movement in the freewheel, the actuating body (11) adjusting the angular position of the fan blades (3) during the relative rotational movement,
**characterized in that** a sun gear (9) of the planetary gear (8) that is connected in a rotationally fixed manner to the drive flange (6) and the drive flange (6) are arranged on axially opposite end faces of the fan wheel (1), wherein the toothing of the sun gear (9), with which the sun gear (9) meshes with planet gears (10) of the planetary gear (8), is arranged axially spaced from the drive flange (6).

2. Fan wheel according to claim 1,
**characterized in that** the sun gear (9) has a smaller outer diameter than the drive flange (6).

3. Fan wheel according to claim 1 or 2,
**characterized in that** the adjusting body (11) is formed by a planet carrier (11) of the planetary gear.

4. Fan wheel according to one of claims 1 to 3,
**characterized in that** the adjusting body (11) has a toothing (17) that meshes with a vane pinion (18) that is arranged on an axle base (19) of the fan blade (3).

5. Fan wheel according to one of claims 1 to 4,
**characterized in that** the freewheel is formed by a guide pin (14) which is connected to the drive flange (6) in a rotationally fixed manner and an arcuate guide track (15) in the hub (4), the guide pin (14) protruding into the guide track (15).

6. Fan wheel according to claim 5,
**characterized in that** the guide track (15) in the hub extends over an angular segment greater than 90°, in particular greater than 120°, preferably at least 150°.

7. Fan wheel according to claim 5 or 6,
**characterized in that** a damping body (16) is arranged at each end of the guide track (15).

8. Fan wheel according to one of claims 5 to 7,
**characterized in that** two guide tracks (15) arranged in a mirror image to the longitudinal and drive axis (2) are introduced into the hub (4), with a guide bolt (14) protruding into each guide track (15).

9. Fan wheel according to one of claims 1 to 8,
**characterized in that** the drive flange (6) is connected in a rotationally fixed manner to a main shaft (7) which supports the hub (4).

10. Fan wheel according to claim 9,
**characterized in that** the sun gear (9) is axially adjacent to the main shaft (7) and is connected to the main shaft (7).

11. Fan wheel according to one of claims 1 to 10, **characterized in that**
a ring gear (12) of the planetary gear (8), in which the planet gears (10) roll, is connected in a rotationally fixed manner to the hub (4).

## Revendications

1. Roue de ventilateur pouvant être entraînée dans un seul sens de rotation, avec des pales de ventilateur (3) montées pivotantes dans un moyeu (4) autour de leurs axes longitudinaux de pale (5), la roue de ventilateur (1) comportant une bride d'entraînement (6) reliée au moyeu (4) par l'intermédiaire d'une roue libre limitée, qui peut être couplée à un moteur d'entraînement pour entraîner la roue de ventilateur, avec un engrenage planétaire (8) entre la bride d'entraînement (6) et les pales de ventilateur (3), un corps d'actionnement (11) entraîné par l'engrenage planétaire (8) étant monté par rapport au moyeu (4) de telle manière que le corps d'actionnement (11) puisse effectuer un mouvement de rotation relatif limité par rapport au moyeu (4) superposé au mouvement d'entraînement rotatif dans la roue libre, le corps d'actionnement (11) réglant la position angulaire des pales de ventilateur (3) pendant le mouvement de rotation relatif, **caractérisé en ce qu'**un pignon solaire (9) de l'engrenage planétaire (8) qui est relié de manière fixe en rotation à la bride d'entraînement (6) et la bride d'entraînement (6) sont disposés sur des faces d'extrémité axialement opposées de la roue de ventilateur (1), la denture du pignon solaire (9), avec laquelle le pignon solaire (9) engrène avec des pignons planétaires (10) de l'engrenage planétaire (8), étant disposée à une distance axiale de la bride d'entraînement (6).

2. Roue de ventilateur selon la revendication 1,
**caractérisé en ce que** le pignon solaire (9) a un diamètre extérieur plus petit que la bride d'entraînement (6).

3. Roue de ventilateur selon la revendication 1 ou 2, **caractérisé en ce que** le corps d'actionnement (11) est formé par un porte-satellites (11) de l'engrenage planétaire.

4. Roue de ventilateur selon l'une des revendications 1 à 3, **caractérisé en ce que** le corps d'actionnement (11) présente une denture (17) qui s'engrène avec un pignon d'aube (18) qui est disposé sur une base d'axe (19) de la pale de ventilateur (3).

5. Roue de ventilateur selon l'une des revendications 1 à 4, **caractérisé en ce que** la roue libre est formée par un axe de guidage (14) qui est relié de manière fixe en rotation à la bride d'entraînement (6) et par une piste de guidage arquée (15) dans le moyeu (4), l'axe de guidage (14) faisant saillie dans la piste de guidage (15).

6. Roue de ventilateur selon la revendication 5,
**caractérisé en ce que** la piste de guidage (15) dans le moyeu s'étend sur un segment angulaire supérieur à 90°, notamment supérieur à 120°, de préférence d'au moins 150°.

7. Roue de ventilateur selon la revendication 5 ou 6,
**caractérisé en ce qu'**un corps d'amortissement (16) est disposé à chaque extrémité de la piste de guidage (15).

8. Roue de ventilateur selon l'une des revendications 5 à 7, **caractérisé en ce que** deux rails de guidage (15) disposés en miroir par rapport à l'axe longitudinal et d'entraînement (2) sont introduits dans le moyeu (4), un axe de guidage (14) faisant saillie dans chaque rail de guidage (15).

9. Roue de ventilateur selon l'une des revendications 1 à 8, **caractérisé en ce que** la bride d'entraînement (6) est reliée de manière fixe en rotation à un arbre principal (7) qui supporte le moyeu (4).

10. Roue de ventilateur selon la revendication 9,
**caractérisé en ce que** le pignon solaire (9) est axialement adjacent à l'arbre principal (7) et est relié à l'arbre principal (7).

11. Roue de ventilateur selon l'une des revendications 1 à 10, **caractérisé en ce qu'**une couronne dentée (12) de l'engrenage planétaire (8), dans laquelle roulent les pignons planétaires (10), est reliée de manière fixe en rotation au moyeu (4).
